(19) Europäisches Patentamt
European Patent Office
Office européen des brevets

(11) **EP 4 365 777 A1**

(12) **EUROPEAN PATENT APPLICATION**

(43) Date of publication:
**08.05.2024 Bulletin 2024/19**

(21) Application number: **23207279.3**

(22) Date of filing: **01.11.2023**

(51) International Patent Classification (IPC):
**G06N 3/094** (2023.01)    **G06N 20/00** (2019.01)

(52) Cooperative Patent Classification (CPC):
**G06N 3/094; G06N 20/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.11.2022 KR 20220144032**
**16.01.2023 KR 20230006384**

(71) Applicant: **Samsung Electronics Co., Ltd.**
**Suwon-si, Gyeonggi-do 16677 (KR)**

(72) Inventors:
• **LIM, Jongin**
**Suwon-si 16678 (KR)**
• **KIM, Byungjai**
**Suwon-si 16678 (KR)**
• **KIM, Youngdong**
**Suwon-si 16678 (KR)**
• **HAN, Seungju**
**Suwon-si 76678 (KR)**

(74) Representative: **Arnold & Siedsma**
**Bezuidenhoutseweg 57**
**2594 AC The Hague (NL)**

(54) **METHOD AND ELECTRONIC DEVICE WITH ADVERSARIAL DATA AUGMENTATION BACKGROUND**

(57)    A method and electronic device with adversarial data augmentation are disclosed. The electronic device includes a processor configured to execute instructions; and a memory storing the instructions, where the execution of the instructions by the processor configures the processor to based on a biased feature within original data, train a biased model to generate biased prediction information using biased training data related to the original data; train a debiased model to generate debiased prediction information using debiased training data, less biased with respect to the biased feature than the biased training data, related to the original data and first adversarial data; and retrain the debiased model using second adversarial data generated based on the biased model and the debiased model.

**FIG. 2**

**Description**

BACKGROUND

1. Field

The following description relates to a method and electronic device with adversarial data augmentation.

2. Description of Related Art

In machine learning models such as image classification models using neural networks, real-world datasets may contain unintended bias and, as a result, the image classification models may learn a biased decision rule during a training process.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, an electronic device includes a processor configured to execute instructions; and a memory storing the instructions, where the execution of the instructions by the processor configures the processor to, based on a biased feature within original data, train a biased model to generate biased prediction information using biased training data related to the original data; train a debiased model to generate debiased prediction information using debiased training data, less biased with respect to the biased feature than the biased training data, related to the original data and first adversarial data; and retrain the debiased model using second adversarial data generated based on the biased model and the debiased model.

The processor may be configured to generate the second adversarial data based on a first loss of the debiased model using training data related to the first adversarial data and a second loss of the biased model using the training data related to the first adversarial data, and wherein the first adversarial data may not comprise the biased feature.

The processor may be configured to increase a training weight, for data having high prediction confidence, among pieces of the original data; and perform the training of the biased model using the increased training weight.

The processor may be configured to regularize the original data such that pieces of data in a same class of the original data are disposed within a single distribution in a feature space.

The processor may be configured to determine a first weight of the original data; determine a second weight of the first adversarial data corresponding to the first weight; and perform the training of the debiased model using the first weight and the second weight.

In another general aspect, a processor-implemented method includes, based on a biased feature within original data, training a biased model to generate biased prediction information using biased training data related to the original data; training a debiased model to generate debiased prediction information using debiased training data, less biased with respect to the biased feature than the biased training data, related to the original data and first adversarial data; and retraining the debiased model using second adversarial data generated based on the biased model and the debiased model.

The adversarial data may include generating the second adversarial data based on a first loss of the debiased model using training data related to the first adversarial data and a second loss of the biased model using training data related to the first adversarial data, and wherein the first adversarial data may not comprise the biased feature.

The training of the biased model may include increasing a training weight, for data having high prediction confidence, among pieces of the original data; and performing the training of the biased model using the increased training weight.

The training of the biased model may include regularizing the original data such that pieces of data in a same class of the original data are disposed within a single distribution in a feature space.

The training of the debiased model may include determining a first weight of the original data; determining a second weight of the first adversarial data corresponding to the first weight; and performing the training of the debiased model using the first weight and the second weight.

In another general aspect, a processor-implemented method includes amplifying a bias of original data; training a biased model to accurately predict a class of the original data with the amplified bias; training a debiased model to generate debiased prediction information regarding respective classes of the original data and first adversarial data; and retraining the debiased model based on second adversarial data generated such that a class predicted by the biased model for an input to the biased model related to the first adversarial data is different from a class of the first adversarial data and a class predicted by the debiased model for an input to the debiased model related to the first adversarial data is same as the class of the first adversarial data.

The generating of the adversarial data may include generating the second adversarial data based on a first loss of the debiased model using training data related to the first adversarial data and a second loss of the biased model using training data related to the first adversarial data.

The amplifying of the bias may include increasing a training weight for data having high prediction confidence among pieces of the original data, and wherein the training of the biased model may include training the biased model using the increased training weight.

The amplifying of the bias may include regularizing the original data such that pieces of data in a same class of the original data are disposed within a single distribution in a feature space.

The training of the debiased model may include determining a first weight of the original data; determining a second weight of the first adversarial data corresponding to the first weight; and performing the training of the debiased model using the first weight and the second weight.

The processor may be further configured to amplify a bias of the original data to generate the biased training data.

The processor may be configured to obtain the biased and debiased prediction information obtained when the first adversarial data is input to the biased model and the debiased model.

The processor is configured to train the debiased model to predict a class of the original data more accurately by parsing pieces of data inaccurately classified out of the feature space using a decision boundary.

The processor may be configured to train the debiased model to predict a class of the original data more accurately by partitioning pieces of data inaccurately classified within the feature space using two decision boundaries.

The method may further include amplifying a bias of the original data to generate the biased training data.

According to yet another aspect, there is provided a computer program product comprising a computer-executable program of instructions for performing, when executed on a computer, the steps of the method of any one of the method embodiments described above.

According to yet another aspect, there is provided a digital storage medium encoding a computer-executable program of instructions to perform, when executed on a computer, the steps of the method of any one of the method embodiments described above.

Other features and aspects will be apparent from the following detailed description, the drawings, and the claims.

BRIEF DESCRIPTION OF THE DRAWINGS

FIG. 1 illustrates an example electronic device according to one or more embodiments.

FIG. 2 illustrates an example method of generating adversarial data according to one or more embodiments.

FIG. 3 illustrates an example decision rule of a debiased model trained using original data according to one or more embodiments.

FIG. 4 illustrates an example decision rule of a debiased model trained using generated adversarial data according to one or more embodiments.

FIG. 5 illustrates an example method of augmenting adversarial data according to one or more embodiments.

FIG. 6 illustrates an example method of augmenting adversarial data according to one or more embodiments.

FIG. 7 illustrates example biased features of original data according to one or more embodiments.

Throughout the drawings and the detailed description, unless otherwise described or provided, the same drawing reference numerals may be understood to refer to the same or like elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application. The use of the term "may" herein with respect to an example or embodiment, e.g., as to what an example or embodiment may include or implement, means that at least one example or embodiment exists where such a feature is included or implemented, while all examples are not limited thereto.

The terminology used herein is for describing various examples only and is not to be used to limit the disclosure. The articles "a," "an," and "the" are intended to include the plural forms as well, unless the context clearly indicates otherwise. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof, or the alternate presence of an alternative stated features, numbers, operations, members, elements, and/or combinations thereof. Additionally, while one embodiment may set forth such terms "comprise" or "comprises," "include" or "includes," and "have" or "has" specify the presence of stated features, numbers, operations, members, elements, and/or combinations thereof, other embodiments may exist where one or more of the stated features, numbers, operations, members, elements, and/or combinations thereof are not present.

As used herein, the term "and/or" includes any one and any combination of any two or more of the associated listed items. The phrases "at least one of A, B, and C", "at least one of A, B, or C", and the like are intended to have disjunctive meanings, and these phrases "at least one of A, B, and C", "at least one of A, B, or C", and the like also include examples where there may be one or more of each of A, B, and/or C (e.g., any combination of one or more of each of A, B, and C), unless the corresponding description and embodiment necessitates such listings (e.g., "at least one of A, B, and C") to be interpreted to have a conjunctive meaning.

Throughout the specification, when a component or element is described as being "connected to," "coupled to," or "joined to" another component or element, it may be directly "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing. It is to be understood that if a component (e.g., a first component) is referred to, with or without the term "operatively" or "communicatively," as "coupled with," "coupled to," "connected with," or "connected to" another component (e.g., a second component), it means that the component may be coupled with the other component directly (e.g., by wire), wirelessly, or via a third component.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein.

Machine models such as image classification models trained by using biased decision rules may not be suitable to be applied to various situations. As a non-limiting example, one or more embodiments may include a method and electronic device that may augument unsupervised bias-adversarial data and train a debiased classification model using the augmented data, which may improve the performance of the debiased classification model by utilizing adversarial data for attacking bias information as additional data and generating the adversarial data without the bias label. In other words, the method may be a method of augmenting unsupervised bias-adversarial data for training a debiased classification model. The present disclosure may be applied when an artificial neural network-based image classification model are commercialized, and may be particularly applicable in situations where it is difficult to obtain a large number of debiased data, such as a classification model for detecting defects in a semiconductor process.

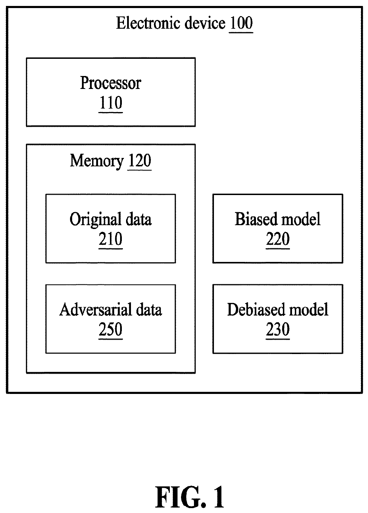

FIG. 1 illustrates an example electronic device 100 according to one or more embodiments.

Referring to FIG. 1, the electronic device 100 may include at least one of a processor 110, a memory 120, a biased model 220, or a debiased model 230, or a combination thereof.

The processor 110 may execute, for example, computer readable instructions (which may include software or programs storied in the memory 120) to control at least one other component (i.e., a hardware component) of the electronic device 100 connected to the processor 110, and may perform various data processing or computation. According to an example, as at least a part of data processing or computation, the processor 110 may store a command or data received from another component (e.g., a sensor or a communication transceiver) in a volatile memory, process the command or the data stored in the volatile memory, and store resulting data in a non-volatile memory. According to an example, the processor 110 is one or more multiple processors such as a main processor (e.g., a central processing unit (CPU) or an application processor (AP)) and/or an auxiliary processor (e.g., a graphics processing unit (GPU), a neural processing unit (NPU), an image signal processor (ISP), a sensor hub processor, or a communication processor (CP)) that is operable independently from, as non-limiting examples. For example, when the electronic device 100 includes the main processor and the auxiliary processor, the auxiliary processor may be adapted to consume less power than the main processor or to be specific to a specified function, noting that examples are not limited thereto. The auxiliary processor may be implemented separately from the main processor or as a part of the main processor.

The auxiliary processor may control at least some of functions or states related to at least one (e.g., displays, sensors, or a communication hardware) of the components of the electronic device 100, instead of the main processor while the main processor is in an inactive (e.g., sleep) state or along with the main processor while the main processor is in an active state (e.g., executing an application). According to an example, the auxiliary processor (e.g., an ISP or a CP) may be implemented as a portion of another component (e.g., cameras or communication hardware) that is functionally related to the auxiliary processor. According to an example, the auxiliary processor (e.g., an NPU) may include a hardware structure specified for artificial intelligence (AI) model processing. An artificial intelligence model may be generated by machine learning. Such learning may be performed by, for example, the electronic device 100 in which an AI model is executed, or performed via a separate server (e.g., a server). Learning algorithms may include, but are not limited to, supervised learning, unsupervised learning, semi-supervised learning, reinforcement learning, or the like. The AI model may include a plurality of neural network layers. A neural network may include a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network, or a combination of two or more thereof, as non-limiting examples. The AI model may be executed using only hardware or by a combination of hardware and a software.

The memory 120 may store various pieces of data used by at least one component (e.g., the processor 110 or a sensor module) of the electronic device 100. The various pieces of data may include, for example, computer readable instructions (which may include software or programs) and input data or output data for a command related thereto. The memory 120 may include a volatile memory or a non-volatile memory, or a combination thereof.

The memory 120 may include at least one of original data 210 or adversarial data 250, or a combination thereof. The original data 210 may include biased data and/or debiased data. The biased data may refer to data including biased features. The debiased data may refer to data with not or less the biased features.

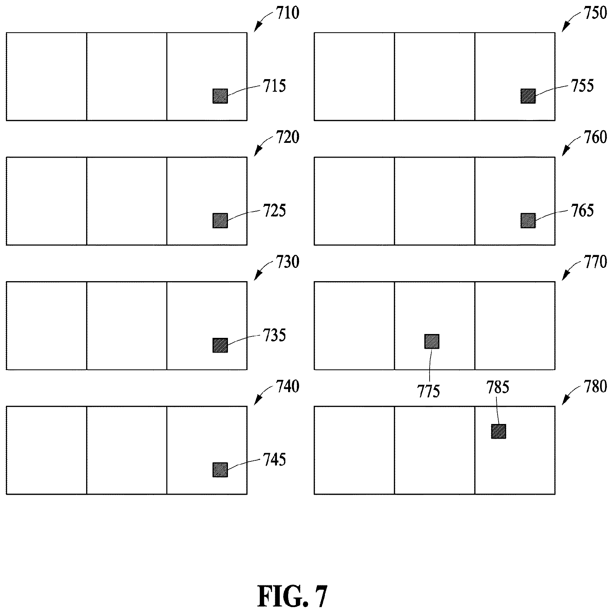

The biased feature may indicate a property that measured or obtained data are biased to a specific value, feature, or characteristic. For example, as shown in FIG. 7, the original data 210 may include information representing images 710, 720, 730, 740, 750, 760, 770, and 780 of three wafers, captured/obtained by a sensing element (e.g., a camera), for semiconductor defect inspection of the three wafers. When semiconductor defects 715, 725, 735, 745, 755, and 765 frequently occur at a same particular position on a particular wafer (e.g., a third wafer), the images 710, 720, 730, 740, 750, and 760 may be determined to include a biased feature that a semiconductor defect occurs at a particular position on a particular wafer (e.g., the third wafer).

In addition to the biased feature shown in FIG. 7, the biased feature may refer to various features in various types of the original data 210, such as shape images of particular motions (e.g., greeting, surfing, running, etc.) of a person, number images, character (e.g., English, Korean, etc.) images, voice data of a person expressing particular emotional states (e.g., joy, sadness, etc.), and the like, as non-limiting examples.

The electronic device 100 may generate the adversarial data 250 to attack the biased feature included in the original data 210. The attacking of the biased feature may prevent a distortion of a decision rule and/or improve decision boundary of a model to be trained by the biased feature. That is, the attacking of the biased feature may prevent erroneous training caused by the biased feature and improve the performance of the debiased model 230.

The electronic device 100 may train the biased model 220 using the original data 210 that include the biased feature(s). The decision rule and/or decision boundary of the trained biased model 220 may depend on the biased feature included in the original data 210.

In an example, the biased model 220 may be a neural network model trained using the original data 210 including the biased feature(s) and the debiased model 230 may be a neural network model trained using the original data 210 and the adversarial data 250 for attacking, diminishing, or dampening the biased feature(s). The electronic device 100 may train the debiased model 230 using the original data 210 and the adversarial data 250. Since the example debiased model 230 is trained using the adversarial data 250, the debiased model 230 may be less influenced by the biased feature of the original data 210 than the biased model 220.

The configuration of the electronic device 100 shown in FIG. 1 is merely an example and is not limited thereto. As a non-limiting example, the biased model 220 and/or the debiased model 230 may be stored in an external electronic device, and the electronic device 100 may train the biased model 220 and/or the debiased model 230 through communication (e.g., wired or wireless communication) with the external electronic device.

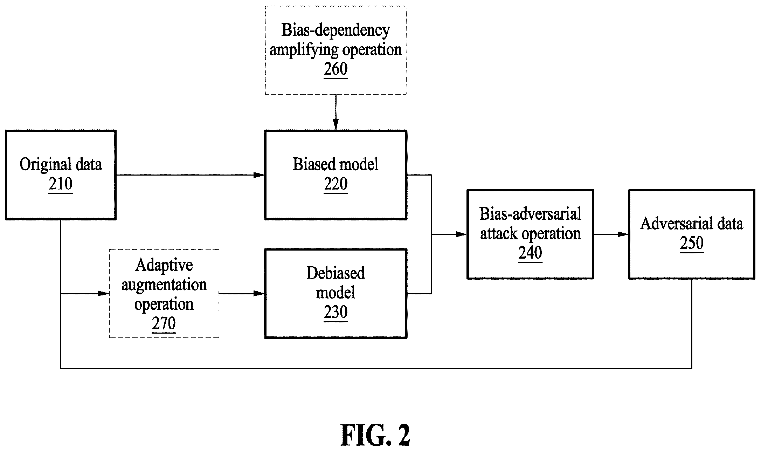

FIG. 2 illustrates an example method performed by an electronic device to generate adversarial data according to one or more embodiments.

The electronic device (e.g., the electronic device 100 in FIG. 1) may perform a bias-adversarial attack operation 240. The electronic device 100 may further perform at least one of a bias-dependency amplifying operation 260 and an adaptive augmentation operation 270, or a combination thereof.

The bias-dependency amplifying operation 260, the adaptive augmentation operation 270, and the bias-adversarial attack operation 240 represent respective operations that may be performed by the electronic device 100. For example, the processor 110 may include at least one processing circuitry of the electronic device 100 that may be configured to perform the bias-dependency amplifying operation 260, the adaptive augmentation operation 270, and/or the bias-adversarial attack operation 240 (e.g., of the processors 110 of FIG. 1, or separate processors distinct from the processor 110, as non-limiting examples).

Referring to FIG. 2, the electronic device 100 may train the biased model 220 using the original data 210. As a non-limiting example, the electronic device 100 may input the original data 210 to the biased model 220 and train the biased model 220 to output prediction information related to the original data 210.

For example, the original data 210 may include at least one piece of biased data. The at least one piece of biased data may represent at least one biased feature. In an example, the biased data may be a sample having the at least one biased feature, which may be referred to as a bias-aligned sample with respect to the at least one biased feature. Among the pieces of original data 210, data not including a specific biased feature or including other biased features may represent a bias-conflicting sample with respect to the specific biased feature.

For example, with respect to biased data including a biased feature 1, data not including the biased feature 1 or including a biased feature 2 that is different from the biased feature 1 may correspond to the bias-conflicting sample with respect to the biased feature 1.

The electronic device 100 may train the biased model 220 to generate and output prediction information related to the original data 210. The prediction information generated and output by the biased model 220 may include various results, such as a class, a predicted value, or the like of the original data 210, as non-limiting examples.

For example, input data of the biased model 220 may include image data of an image (e.g., captured by a camera of or associated with the electronic device 100, or patch of the same , and the biased model 220 may be trained to generate output data predicting a class of the image. The type of neural network used to train the biased model 220, input data, output data, and the like may be set in various ways, and are not limited to the above examples.

The electronic device 100 may train the debiased model 230 to generate and output prediction information related to the original data 210 and the adversarial data 250.

The adversarial data 250 may represent data for attacking the biased feature of biased data included in the original data 210. The data for attacking the biased feature may indicate a bias-conflicting sample.

The electronic device 100 may be configured to prevent the debiased model 230 from learning a wrong decision rule by the biased data, by training the debiased model 230 using the adversarial data 250. The electronic device 100 may generate the adversarial data 250 and train the debiased model 230 using the generated adversarial data 250 and the original data 210.

The bias-adversarial attack operation 240 of the electronic device 100 may generate the adversarial data 250. For example, the electronic device 100 may generate the adversarial data 250 based on the first prediction information of the biased model 220 and the second prediction information of the debiased model 230.

For example, as shown in Equation 1 below, the electronic device 100 may generate the adversarial data 250 based on a first loss according to the prediction information of the debiased model 230 for the adversarial data 250 and a second loss according to the prediction information of the biased model 220 for the adversarial data 250.

Equation 1:

$$x_{adv} = \operatorname*{argmin}_{x := x_0 + \delta} \left\{ \mathcal{L}(f_D(x), y) - \mathcal{L}(f_B(x), y) \right\}$$

In Equation 1 above, $x_{adv}$ represents the adversarial data 250, $\mathcal{L}(f_D(x), y)$ represents a cross entropy loss of the debiased model 230, and $\mathcal{L}(f_B(x), y)$ represents a cross entropy loss of the biased model 220. For example, $\mathcal{L}(f_D(x), y)$ may represent a cross entropy loss of a case where the debiased model 230 predicts a class of the adversarial data 250 (x) as y.

In Equation 1 above, $\mathcal{L}(f_D(x), y)$ may represent the first loss according to the prediction information of the debiased model 230 for the adversarial data 250 and $\mathcal{L}(f_B(x), y)$ may represent the second loss according to the prediction information of the biased model 220 for the adversarial data 250.

As shown in Equation 1, the electronic device 100 may determine the adversarial data 250 such that the debiased model 230 outputs accurate prediction information and the biased model 220 outputs inaccurate prediction information. In Equation 1 above, in order for $\mathcal{L}(f_D(x), y) - \mathcal{L}(f_B(x), y)$ to be minimized, the debiased model 230 needs to output accurate prediction information and the biased model 220 needs to output inaccurate prediction information.

For example, the electronic device 100 may generate the adversarial data 250 under a condition that does not affect the prediction information of the debiased model 230. The original data 210 may not include a bias label for distinguishing between biased data (e.g., the bias-aligned sample) and debiased data (e.g., the bias-conflicting sample), and therefore, the electronic device 100 may generate the adversarial data 250 for attacking only the biased feature under the condition.

As an example, the electronic device 100 may determine the adversarial data 250 according to Equation 1 using a projected gradient descent (PGD).

An example of using the prediction information of the biased model 220 and the prediction information of the debiased model 230 in the operation of the electronic device 100 to determine the adversarial data 250 is not limited to Equation 1, and loss functions of the biased model 220 and/or the debiased model 230 may be set in various ways.

The electronic device 100 may prevent the debiased model 230 from learning the wrong decision rule by the biased feature of the biased data included in the original data 210, by using the original data 210 and the adversarial data 250, thereby improving the performance of the debiased model 230.

For example, the bias-dependency amplifying operation 260 may increase a training weight for data having high prediction confidence among the pieces of original data 210. The electronic device 100 may train the biased model 220 using the increased training weight determined by the bias-dependency amplifying operation 260.

As shown in Equation 2 below, the electronic device 100 may determine data having high prediction confidence among the pieces of original data 210 using generalized cross entropy. The electronic device 100 may determine a training weight of each piece of data based on Equation 2.

Equation 2:

$$\mathcal{L}_q(f(\boldsymbol{x}), e_j) = \frac{(1 - f_j(\boldsymbol{x})^q)}{q}$$

Since each data included in the original data 210 may not include a bias label, the biased model 220 may not be determined to predict an ideal biased result. As the training weight of the biased data is increased by using the bias-dependency amplifying operation 220, the electronic device 100 may induce the training such that the biased model 220 becomes more dependent on the biased data.

In Equation 2 above, $f(x)$ is an output value of a network (e.g., the biased model 220) and may represent confidence of a probability that data belongs to the predicted class, q is a hyper parameter and may be set to an arbitrary value of 0 or more and 1 or less.

For example, as q approaches 0, the generalized cross entropy may approach the existing cross entropy. As q approaches 0, the generalized cross entropy may approach a differential value.

In a case of the generalized cross entropy, a differential value may be determined small for a sample with low prediction confidence compared to the cross entropy loss, and therefore, the electronic device 100 may train the biased model 220 with samples having high confidence according to Equation 2.

The electronic device 100 may reinforce the dependency of the biased model 220 on the biased feature by emphasizing data having high prediction confidence, for example, an easy sample.

For example, the bias-dependency amplifying operation 260 may regularize the original data 210 such that pieces of data in a same class of the original data 210 are within a single distribution in a feature space.

Equation 3:

$$P_i = \frac{\exp(-\tau d_m^2(\mathbf{z}_i, \mathcal{D}_i))}{\sum_{\mathcal{D}_c \in \mathbb{D}} \exp(-\tau d_m^2(\mathbf{z}_i, \mathcal{D}_c))},$$

Equation 4:

$$\mathcal{L}_D = \frac{1}{N_b} \sum_{i=1}^{N_b} -\log P_i.$$

In Equation 3 above, $P_i$ may represent likelihood that $z_i$ belongs to a class distribution $\mathcal{D}_i$. $d_m(\mathbf{z}_i, \mathcal{D}_i)$ may represent a distance (e.g., mahala Nobis distance) from $z_i$ and the class distribution $\mathcal{D}_i$. In Equation 3, $P_i$ may represent a softmax value for a distance from $z_i$ and the class distribution $\mathcal{D}_i$. $\mathcal{T}$ is a temperature hyper parameter and may be set as a predetermined positive number.

The electronic device 100 may calculate likelihood $P_i$ that $z_i$ belongs to the class distribution $\mathcal{D}_i$ according to Equation 3 above.

Equation 4 above represents a negative log-likelihood (NLL) loss for the likelihood.

As shown in Equations 3 and 4, the electronic device 100 may regularize the original data 210 based on a condition that the data in a same class are arranged within a single distribution in a feature space. The electronic device 100 may induce the biased model 220 to be trained by focusing on biased data or a bias-guiding sample by forcing the feature space to be structured simply.

For example, the adaptive augmentation operation 270 of the electronic device 100 may adaptively augment the original data 210 and the generated adversarial data 250.

The electronic device 100 may determine weights or importance weights of the original data 210 and the adversarial data 250 and train the debiased model 230 according to the determined weights.

For example, the electronic device 100 may determine a first weight of the original data 210 and determine a second weight of the adversarial data 250 corresponding to the first weight. The electronic device 100 may train the debiased model 230 using the first weight and the second weight.

For example, the electronic device 100 may determine the first weight of the original data 210 as W and determine the second weight of the adversarial data 250 as 1-W corresponding to the first weight W.

For example, the electronic device 100 may determine the first weight W of the original data 210 by applying a method of obtaining a weight according to a re-weighting method.

The adaptive augmentation operation 270 of the electronic device 100 may combine the original data 210 with the adversarial data 250. The electronic device 100 may train the debiased model 230 using the original data 210 combined with the adversarial data 250.

As shown in FIG. 2, the electronic device 100 may generate the adversarial data 250 for attacking the biased feature of the original data 210. In an example, the electronic device 100 may train the debiased model 230 using the generated adversarial data 250 and the original data 210 to prevent the distortion of the decision rule of the trained debiased model 230 due to the biased feature, thereby improving the performance of the debiased model 230. The electronic device 100 may generate the adversarial data 250 in the process of training the biased model 220 and the debiased model 230.

For example, the original data 210 may include images obtained for semiconductor defect inspection (e.g., BF inspection) in a semiconductor process, and the biased model 220 and the debiased model 230 may be neural network models configured to determine whether a semiconductor is defective from the input images.

Real-world datasets may contain unintended bias due to factors, such as actual processes and/or environments, as non-limiting examples. For example, when semiconductor defects frequently occur at a particular position on plural images of a wafer, those plural images among the images determined to be defective may be caused by the defects occurring at the particular position on the wafer.

As described above, the original data 210 including images in which the semiconductor defects frequently occur at a particular position on a wafer may be determined as a biased dataset. A neural network model trained with the biased dataset may determine whether a defect occurs according to a pattern of a particular area or may be trained with a wrong decision rule that does not determine a defect occurring at positions other than the particular position on the wafer. The neural network model trained with the biased dataset is difficult to be generalized in various environments, and performance thereof may deteriorate when the neural network model is applied in a real environment.

The electronic device 100 may train the debiased model 230 using the generated adversarial data 250 and the original data 210 including images in which the defects frequently occur at a particular position on a wafer. Since the electronic device 100 trains the debiased model 230 using the generated adversarial data 250, the debiased model 230 may not determine whether a defect occurs according to a pattern of a particular area and may identify whether a semiconductor is defective, even if the defects occur at positions other than the particular position on the wafer.

The electronic device 100 may train the debiased model 230 by collecting the original data 210 including various forms and types of biased features, in addition to collecting the images including the biased features as the original data 210 as described above.

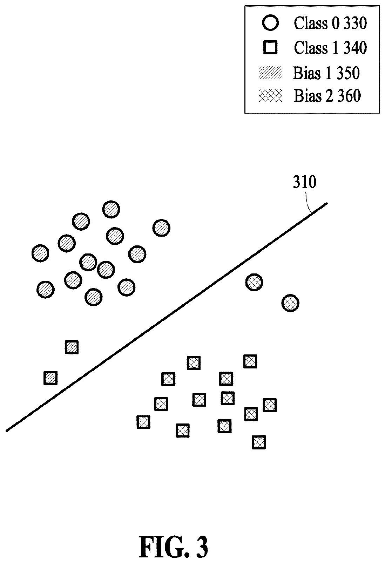

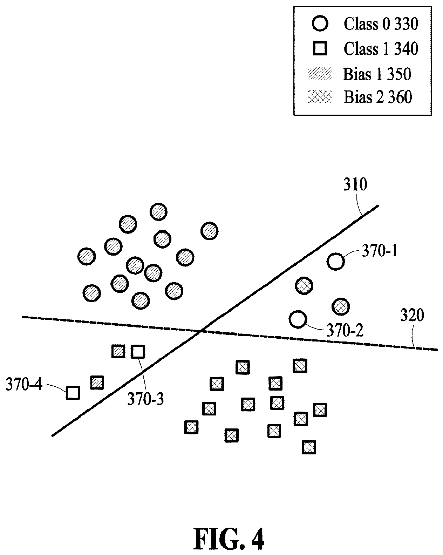

FIG. 3 illustrates an example decision rule of a debiased model trained using original data according to one or more embodiments. FIG. 4 illustrates an example decision rule of a debiased model trained using adversarial data generated according to one or more embodiments. In both FIG. 3 and FIG. 4, circles indicate data are classified as class 0 (330), and squares indicate data are classified as class 1 (340). Bias 1 (350) and bias 2 (360) indicate that data include biased features 1 and 2, respectively.

FIGS. 3 and 4 show examples in which the original data (e.g., the original data 210) may have a biased feature of the bias 1 (350) or the bias 2 (360) and be classified as the class 0 (330) or the class 1 (340). The number of biased features and the number of classes are not limited to the examples shown in FIGS. 3 and 4.

In addition, FIGS. 3 and 4 show a decision boundary 310 of the biased model (e.g., the biased model 220) and/or the debiased model (e.g., the debiased model 230) for predicting a class of input data (from the original data), but the biased model 220 and/or the debiased model 230 are not limited to classification models for predicting a class, and any suitable neural network model may be applied to perform the prediction operation.

In FIG. 3, the trained debiased model 230 may determine a class of the original data 210 according to the biased decision boundary 310. Among the data located at upper and left side of the biased decision boundary 310, the debiased model 230 may inaccurately predict the class of the data corresponding to class 1(340) and having the biased feature of the bias 1 (350) as the class 0 (330). In addition, among the data located at lower and right side of the biased decision boundary 310, the debiased model 230 may inaccurately predict the class of the data corresponding to class 0 (330) and having the biased feature of the bias 2 (360) as the class 1 (340).

As shown in FIG. 3, the debiased model 230 may have a biased decision rule based on the biased data included in the original data 210. Due to the biased features included in the original data 210, the debiased model 230 trained using the original data 210 may predict an inaccurate result.

As shown in FIG. 4, the electronic device 100 may generate the adversarial data 370-1, 370-2, 370-3, and 370-4 (e.g., the adversarial data 250). An additional decision boundary 320 may be determined by the debiased model 230 using the original data 210 and the adversarial data 370-1, 370-2, 370-3, and 370-4 as shown in FIG. 4.

With the additional decision boundary 320, the debiased model 230 trained using the original data 210 and the adversarial data 370-1, 370-2, 370-3, and 370-4 may predict a class of input data in an more accurate manner. Unlike the debiased model 230 shown in FIG. 3, the debiased model 230 shown in FIG. 4 may predict the class of the input data more accurately by parsing or partitioning the data inaccurately classified in FIG. 3 out of the feature space, or within the feature space, using the decision boundaries 310 and 320 .

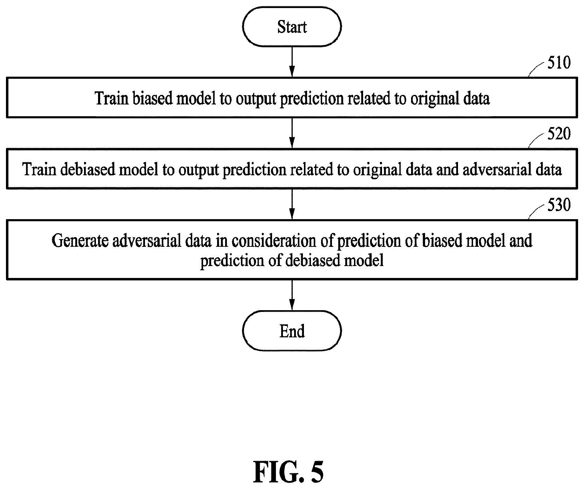

FIG. 5 illustrates an example method of augmenting adversarial data according to one or more embodiments. The example method may include operations 510 through 530 as a non-limiting example, and these operations of the example method may be performed by an electronic device (e.g., the electronic device 100) or the processor 110 of the electronic device 100.

Referring to FIG. 5, in operation 510, the electronic device 100 may train a biased model (e.g., the biased model 220) to generate and output prediction information related to original data (e.g., the original data 210). The prediction information generated and output by the biased model 220 may be set based on the types, structures, and the like of the original data 210 and the biased model 220. For example, when the original data 210 include image data of images captured by a camera associated with the electronic device 100, the biased model 220 may be trained to generate and output prediction information regarding a class of these images.

In operation 520, the electronic device 100 may train a debiased model (e.g., the debiased model 230) to generate and output prediction information related to the original data 210 and the adversarial data 250. The adversarial data 250 may include and indicate a bias-conflicting sample for attacking a biased feature of the original data 210. The attacking of the biased feature may prevent the debiased model 230 from being trained with a distortion of a decision rule and/or decision boundary of the debiased model 230 according to the biased feature, thereby improving the performance of the debiased model 230.

In operation 530, the electronic device 100 may generate the adversarial data 250 based on the prediction information of the biased model 220 and the prediction information of the debiased model 230, which may be obtained when the adversarial data 250 are input to the biased model 220 and the debiased model 230.

The electronic device 100 may determine the adversarial data 250 such that the biased model 220 outputs inaccurate prediction information for the adversarial data 250 and the debiased model 230 outputs accurate prediction information for the adversarial data 250.

In an example, the outputting of the inaccurate prediction information by the biased model 220 for the adversarial data 250 may imply that the adversarial data 250 conflicts with the decision rule of the trained biased model 220 due to the biased feature. In other words, it implies that a class of the adversarial data 250 predicted by the debiased model 230 is different from a class of the adversarial data 250 predicted by the biased model 220.

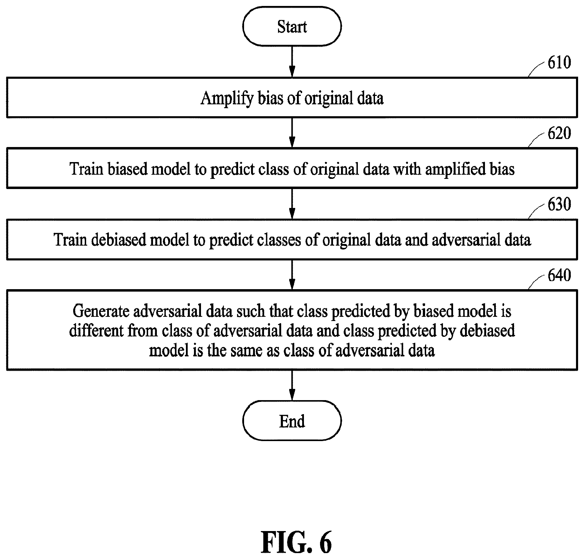

FIG. 6 illustrates an example method of augmenting adversarial data according to one or more embodiments. The example method may include operations 610 through 640 as a non-limiting example, and these operations of the example method may be performed by an electronic device (e.g., the electronic device 100) or the processor 110 of the electronic device 100.

In operation 610, the electronic device 100 may amplify bias of original data (e.g., the original data 210). The original data 210 may include various features corresponding to multiple classes. Thus, the original data 210 with the amplified bias may include data with more or amplified biased features.

For example, the electronic device 100 may set a high training weight for data having high prediction confidence by using generalized cross entropy loss to train a biased model (e.g., the biased model 220 of FIG. 1), thereby reinforcing the dependency of the biased model 220 on the biased feature by emphasizing an easy sample.

In operation 620, the electronic device 100 may train the biased model 220 to accurately predict class(es) of the original data 210 with the amplified bias.

In a case of training the biased model 220 using the original data 210 with the amplified bias, the biased model 220 may be trained with a decision rule that is more dependent on the biased feature, compared to a case of training the biased model 220 using the original data 210 without the amplified bias.

For example, when the biased model 220 predicts a class (e.g., among plural classes that may be predicated by the biased model 220) of input data using the decision rule dependent on the biased feature, the biased model 220 may predict a same class as that of a set of the biased data among the original data 210 only when the input data has a feature similar to the biased feature.

In operation 630, the electronic device 100 may train a debiased model (e.g., the debiased model 230) to predict respective classes of the original data 210 and previously generated adversarial data (e.g., previously generated adversarial data 250).

The electronic device 100 may determine respective weights of the original data 210 and the previously generated adversarial data 250 and train the debiased model 230 according to the determined respective weights. For example, the electronic device 100 may determine a first weight of the original data 210 as W, and determine a second weight of the previously generated adversarial data 250 as 1-W.

In operation 640, the electronic device 100 may generate current adversarial data 250 such that a class predicted by the biased model 220 is different from the class of the current adversarial data 250 and a class predicted by the debiased model 230 may be the same as the class of the current adversarial data 250.

For example, the electronic device 100 may be considered to be attacking the biased feature in the generation of the current adversarial data 250 so the class of the current adversarial data 250 is different from the class predicted (e.g., when input the previously or current generated adversarial data 250) by the biased model 220, and the class of the adversarial data 250 is the same as the class predicted (e.g., when input the previously or current generated adversarial data 250) by the debiased model 230.

Operations 610 through 640 (or operations 630 through 640) may be repeated until a condition is met (e.g., a threshold accuracy measure and/or other conditions).

FIG. 7 illustrates an example biased features of original data according to one or more embodiments.

The original data 210 may include the images 710, 720, 730, 740, 750, 760, 770, and 780 captured by a camera associated with an electronic device (e.g., the electronic device 100) for semiconductor defect inspection. Semiconductor defects may frequently occur at a particular position on a particular wafer. In an example, as shown in the images 710, 720, 730, 740, 750, and 760, the defects 715, 725, 735, 745, 755, and 765 may occur at a same particular position on a third wafer.

In FIG. 7, the images 710, 720, 730, 740, 750, and 760 may show a biased feature of the original data regarding a particular position on a wafer, where a semiconductor defect occurs, in this example, a particular position on the third wafer.

For example, when the biased model 220 for determining whether a semiconductor is defective is trained using the images 710, 720, 730, 740, 750, 760, 770, and 780, the biased model 220 may be trained to determine whether a defect occurs according to a pattern of a particular area (e.g., a particular position on the third wafer of the images 710, 720, 730, 740, 750, 760, 770, and 780). Thus, when defects 775 and 785 shown in the images 770 and 780 occur in areas other than the particular position on the third wafer shown in the images 710, 720, 730, 740, 750, and 760, the trained biased model 220 may not identify whether the semiconductor is defective or not.

When the debiased model 230 is trained using the original data 210 and the adversarial data 250, the electronic device 100 may more accurately (compared to the biased model 220 and compared to a classification model trained using only the original data)identify whether the semiconductor is defective when the defects 775 and 785 shown in the images 770 and 780 occur in areas other than the particular position on the third wafer shown in the images 710, 720, 730, 740, 750, and 760. In addition, the trained debiased model 230 may determine whether the semiconductor is defective according to a pattern in areas other than the particular area as a non-limiting example.

The processors, memories, electronic devices, apparatuses, cameras, models and other apparatuses, devices, and components described herein with respect to FIGS. 1-7 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-7 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above disclosure, the scope of the disclosure may also be defined by the claims and their equivalents, and all variations within the scope of the claims and their equivalents are to be construed as being included in the disclosure.

**Claims**

1. An electronic device comprising:

   a processor configured to execute instructions; and
   a memory storing the instructions, where the execution of the instructions by the processor configures the processor to:

   based on a biased feature within original data, train a biased model to generate biased prediction information using biased training data related to the original data;
   train a debiased model to generate debiased prediction information using debiased training data, less biased with respect to the biased feature than the biased training data, related to the original data and first adversarial data; and
   retrain the debiased model using second adversarial data generated based on the biased model and the debiased model.

2. The electronic device of claim 1, wherein the processor is configured to:

   generate the second adversarial data based on a first loss of the debiased model using training data related to the first adversarial data and a second loss of the biased model using the training data related to the first adversarial data, and
   wherein the first adversarial data do not comprise the biased feature.

3. The electronic device according to any one of the previous claims, wherein the processor is configured to:

   increase a training weight, for data having high prediction confidence, among pieces of the original data; and
   perform the training of the biased model using the increased training weight.

4. The electronic device according to any one of the previous claims, wherein the processor is configured to:

regularize the original data such that pieces of data in a same class of the original data are disposed within a single distribution in a feature space;

preferably, the processor is configured to train the debiased model to predict a class of the original data more accurately by parsing pieces of data inaccurately classified out of the feature space using a decision boundary; and/or the processor is configured to train the debiased model to predict a class of the original data more accurately by partitioning pieces of data inaccurately classified within the feature space using two decision boundaries.

5. The electronic device according to any one of the previous claims, wherein the processor is configured to:

determine a first weight of the original data;
determine a second weight of the first adversarial data corresponding to the first weight; and
perform the training of the debiased model using the first weight and the second weight; and/or
wherein the processor is further configured to amplify a bias of the original data to generate the biased training data; and/or
wherein the processor is configured to obtain the biased and debiased prediction information obtained when the first adversarial data is input to the biased model and the debiased model.

6. A processor-implemented method, comprising:

based on a biased feature within original data, training a biased model to generate biased prediction information using biased training data related to the original data;
training a debiased model to generate debiased prediction information using debiased training data, less biased with respect to the biased feature than the biased training data, related to the original data and first adversarial data; and
retraining the debiased model using second adversarial data generated based on the biased model and the debiased model.

7. The method of claim 6, wherein the generating of the adversarial data comprises:

generating the second adversarial data based on a first loss of the debiased model using training data related to the first adversarial data and a second loss of the biased model using training data related to the first adversarial data, and
wherein the first adversarial data do not comprise the biased feature.

8. The method according to any one of the previous claims 6-7, wherein the training of the biased model comprises:

increasing a training weight, for data having high prediction confidence, among pieces of the original data; and
performing the training of the biased model using the increased training weight.

9. The method according to any one of the previous claims 6-7, wherein the training of the biased model comprises:
regularizing the original data such that pieces of data in a same class of the original data are disposed within a single distribution in a feature space.

10. The method according to any one of the previous claims 6-7, wherein the training of the debiased model comprises:

determining a first weight of the original data;
determining a second weight of the first adversarial data corresponding to the first weight; and
performing the training of the debiased model using the first weight and the second weight; and/or
wherein the method further comprises amplifying a bias of the original data to generate the biased training data.

11. A processor-implemented method, comprising:

amplifying a bias of original data;
training a biased model to accurately predict a class of the original data with the amplified bias;
training a debiased model to generate debiased prediction information regarding respective classes of the original data and first adversarial data; and
retraining the debiased model based on second adversarial data generated such that a class predicted by the biased model for an input to the biased model related to the first adversarial data is different from a class of the first adversarial data and a class predicted by the debiased model for an input to the debiased model related to the first adversarial data is same as the class of the first adversarial data.

12. The method of claim 11, wherein the generating of the adversarial data comprises:
generating the second adversarial data based on a first loss of the debiased model using training data related to the first adversarial data and a second loss of the biased model using training data related to the first adversarial data.

13. The method according to any one of the previous claims 11-12,

wherein the amplifying of the bias comprises increasing a training weight for data having high prediction confidence among pieces of the original data, and
wherein the training of the biased model comprises training the biased model using the increased training weight.

14. The method according to any one of the previous claims 11-12, wherein the amplifying of the bias comprises:
regularizing the original data such that pieces of data in a same class of the original data are disposed within a single distribution in a feature space.

15. The method according to any one of the previous claims 11-12, wherein the training of the debiased model comprises:

determining a first weight of the original data;
determining a second weight of the first adversarial data corresponding to the first weight; and
performing the training of the debiased model using the first weight and the second weight.

Electronic device 100

Processor
110

Memory 120

Original data
210

Biased model
220

Adversarial data
250

Debiased model
230

# FIG. 1

**FIG. 2**

FIG. 3

| | |
|---|---|
| O | Class 0 330 |
| □ | Class 1 340 |
| ▨ | Bias 1 350 |
| ▨ | Bias 2 360 |

FIG. 4

Start

510
Train biased model to output prediction related to original data

520
Train debiased model to output prediction related to original data and adversarial data

530
Generate adversarial data in consideration of prediction of biased model and prediction of debiased model

End

# FIG. 5

Start

610

Amplify bias of original data

620

Train biased model to predict class of original data with amplified bias

630

Train debiased model to predict classes of original data and adversarial data

640

Generate adversarial data such that class predicted by biased model is
different from class of adversarial data and class predicted by debiased
model is the same as class of adversarial data

End

# FIG. 6

**FIG. 7**

Europäisches
Patentamt

European
Patent Office

Office européen
des brevets

# EUROPEAN SEARCH REPORT

Application Number

EP 23 20 7279

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JUNGSOO LEE ET AL: "Learning Debiased Representation via Disentangled Feature Augmentation", ARXIV.ORG, CORNELL UNIVERSITY LIBRARY, 201 OLIN LIBRARY CORNELL UNIVERSITY ITHACA, NY 14853, 25 October 2021 (2021-10-25), XP091068719, * abstract sections 4, 5 and D Equations 2-4; figure 1 * | 1-15 | INV. G06N3/094 G06N20/00 |
| T | LIM JONGIN ET AL: "BiasAdv: Bias-Adversarial Augmentation for Model Debiasing", 2023 IEEE/CVF CONFERENCE ON COMPUTER VISION AND PATTERN RECOGNITION (CVPR), IEEE, 17 June 2023 (2023-06-17), pages 3832-3841, XP034402681, DOI: 10.1109/CVPR52729.2023.00373 [retrieved on 2023-08-22] * abstract; sections 3, 4; figures 1, 2 * | 1-15 | |
| A | NAYEONG KIM ET AL: "Learning Debiased Classifier with Biased Committee", ARXIV.ORG, CORNELL UNIVERSITY LIBRARY, 201 OLIN LIBRARY CORNELL UNIVERSITY ITHACA, NY 14853, 15 September 2022 (2022-09-15), XP091318140, * abstract; sections 3, 4; figure 2 * | 1-15 | TECHNICAL FIELDS SEARCHED (IPC) G06N |

-/--

The present search report has been drawn up for all claims

| Place of search | Date of completion of the search | Examiner |
|---|---|---|
| The Hague | 14 March 2024 | Tebbal Barracosa, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 23 20 7279

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YUXIANG WU ET AL: "Generating Data to Mitigate Spurious Correlations in Natural Language Inference Datasets", ARXIV.ORG, CORNELL UNIVERSITY LIBRARY, 201 OLIN LIBRARY CORNELL UNIVERSITY ITHACA, NY 14853, 24 March 2022 (2022-03-24), XP091184085, * abstract sections 2, 3, 4, 5; figure 1 * | 1-15 | |
| A | EUNGYEUP KIM ET AL: "BiaSwap: Removing dataset bias with bias-tailored swapping augmentation", ARXIV.ORG, CORNELL UNIVERSITY LIBRARY, 201 OLIN LIBRARY CORNELL UNIVERSITY ITHACA, NY 14853, 23 August 2021 (2021-08-23), XP091037060, * abstract; sections 3, 4; figure 1 * | 1-15 | |

TECHNICAL FIELDS SEARCHED (IPC)

The present search report has been drawn up for all claims

| Place of search | Date of completion of the search | Examiner |
|---|---|---|
| The Hague | 14 March 2024 | Tebbal Barracosa, B |

EPO FORM 1503 03.82 (P04C01)